# EUROPÄISCHE PATENTSCHRIFT

(11) **EP 1 917 587 B1**
(45) Veröffentlichungstag und Bekanntmachung des Hinweises auf die Patenterteilung: **03.10.2012**
(21) Anmeldenummer: 06777983.5
(22) Anmeldetag: 26.07.2006
(51) Int. Cl.: G06F 9/48

(54) **VERFAHREN UND VORRICHTUNG ZUR STEUERUNG EINES RECHNERSYSTEMS**
METHOD AND DEVICE FOR CONTROLLING A COMPUTER SYSTEM
PROCEDE ET DISPOSITIF POUR COMMANDER UN SYSTEME INFORMATIQUE

(30) Priorität: 08.08.2005 DE 102005037216
(43) Veröffentlichungstag der Anmeldung: 07.05.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064672
(87) Internationale Veröffentlichungsnummer: WO 2007/017382

(56) Entgegenhaltungen:
- US-B1- 6 615 366
- SILBERSCHATZ A ET AL: "OPERATING SYSTEM CONCEPTS, PASSAGE" OPERATING SYSTEM CONCEPTS, XX, XX, 1994, Seiten I-III,97, XP002357389
- CASAVANT T L ET AL: "A TAXONOMY OF SCHEDULING IN GENERAL-PURPOSE DISTRIBUTED COMPUTING SYSTEMS" IEEE TRANSACTIONS ON SOFTWARE ENGINEERING, IEEE SERVICE CENTER, LOS ALAMITOS, CA, US, Bd. 14, Nr. 2, 1. Februar 1988 (1988-02-01), Seiten 141-154, XP000039761 ISSN: 0098-5589

## Beschreibung

### Stand der Technik

Im Bereich eingebetteter Systeme, z.B. Automobiltechnik oder Automatisierungstechnik, gibt es Anwendungen, bei denen ein Fehler in der µC-Hardware potenziell sicherheitsrelevante Konsequenzen haben kann. Um diese Konsequenzen zu vermeiden oder die Auswirkungsschwere zu verringern, werden Überwachungsmaßnahmen verwendet, die Fehler detektieren sollen. Es gibt Anwendungen, in denen eine solche Überwachung nahezu permanent notwendig ist, in anderen Anwendungen gibt es Überwachungsfunktionen, die regelmäßig (z. B. periodisch) oder auf bestimmte Anforderungen hin, überprüfen, ob der Rechner oder auch andere Komponenten noch korrekt funktionieren.

Die hier vorgeschlagene Erfindung steht im Zusammenhang mit der Anmeldung DE 103 32 700A 1. Dort wird ein Verfahren und eine Vorrichtung zur Umschaltung zwischen zwei Betriebsmodi einer Prozessoreinheit beschrieben. Die Prozessoreinheit hat mindestens zwei Ausführungseinheiten und die unterschiedlichen Betriebsmodi zielen darauf ab, dass die Prozessoreinheit mindestens in einem so genannten Performanzmodus als auch in einem so genannten Vergleichsmodus (VM) betrieben werden kann. Im Performanzmodus werden auf z.B. zwei Ausführungseinheiten unterschiedliche Programme ausgerührt. Im Vergleichsmodus werden dagegen auf beiden Ausführungseinheiten identische Programme ausgeführt und das Ergebnis beider Ausrührungseinheiten miteinander verglichen und bei einer Differenz ein Fehlersignal ausgelöst. Grundsätzlich ist es aus Sicht der Rechenleistung vorteilhaft, möglichst viele Aufgaben in einem möglichst leistungsfähigen Modus (Performanzmodus) laufen zu lassen. Dem steht gegenüber, dass, gerade in sicherheitsrelevanten Anwendungen, fast alle Aufgaben mit guter Fehlererkennung berechnet werden sollen. Im Stand der Technik für solche Anwendungen ist es also schwierig oder nicht möglich einen großen Teil der Rechenleistung eines Performanzmodus zu nutzen.

Es gibt Anwendungen, die relativ komplexe Anforderungen an Fehlererkennung haben. Z.B. ist bei vielen regelungstechnischen Anwendungen eine Störung, die nur sehr kurzfristig wirkt, durch die Anwendung selbst toleriert, für transiente Fehler besteht damit an vielen Stellen keine Fehlererkennungsanforderung. Für permanente Fehler dagegen besteht diese Anforderung. Es gibt aber im Stand der Technik keine allgemein verwendbaren Möglichkeiten, diesen Anforderungskonflikt kostenoptimal zu lösen.

Die Zeit, welche für die Umschaltung zwischen den verschiedenen Betriebsmodi (Performanzmodus, Vergleichsmodus) benötigt wird, ist nicht zu vernachlässigen. Bei einer sehr häufigen Umschaltung fällt dieser Overhead ins Gewicht Um bei einem Schedulingproblem optimale Strategien fahren zu können, ist es aus Sicht der Anwendungssoftware notwendig, auch kurzfristig einen häufigeren Wechsel von Aufgaben zu veranlassen.

Aus der US 6,615,366 sind bereits Systeme mit zwei Ausführungseinheiten bekannt die in zwei unterschiedlichen Betriebsmodi betrieben werden können.

### Vorteile der Erfindung

Die Aufgabe der Erfindung ist es, eine Optimierung der Anzahl der durchzuführenden Umschaltungen zwischen den Modi zu ermöglichen und dadurch Rechenzeit einzusparen.

Es ist ebenfalls Aufgabe der Erfindung, den potenziellen Performanzgewinn eines Modus möglichst gut auszunutzen, d.h. möglichst viel Rechenleistung in einem Performanzmodus zu verwenden.

Das erfindungsgemäße Verfahren und die erfindungsgemäße Vorrichtung zur Steuerung eines Rechnersystems mit wenigstens zwei Ausführungseinheiten weist wenigstens zwei Betriebsmodi auf zwischen denen umgeschaltet wird. Ein erster Betriebsmodus entspricht einem Vergleichsmodus und ein zweiter Betriebsmodus entspricht einem Performanzmodus, wobei wenigstens eine Menge von Laufzeitobjekten definiert ist und ein Scheduler, vorgesehen ist, der den Laufzeitobjekten abhängig von einer Betriebsmodusinformation Ressourcen des Rechnersystems zuordnet. Dabei wird jedem Laufzeitobjekt der definierten Menge wenigstens eine Kennung zugeordnet ist und die Kennung ordnet dem Laufzeitobjekt wenigstens einen der beiden Betriebsmodi zu. Weiterhin werden Informationen über einen aktuellen Betriebsmodus des Rechnersystems bei der Ressourcenzuordnung berücksichtigt.

Das erfindungsgemäße Verfahren und die erfindungsgemäβße Vorrichtung sind ist Anspruch 1 bzw. Anspruch 5 definiert.

Vorteilhafterweise verwendet man ein Verfahren bzw. Vorrichtung, bei dem Informationen über einen zukünftigen Betriebsmodus des Rechnersystems vorhanden sind und das Steuerprogramm diese bei der Ressourcenzuordnung berücksichtigt

Vorteilhafterweise verwendet man eine Vorrichtung, bei der die Mittel, durch welche wenigstens eine Menge von Laufzeitobjekten definiert wird, als Speichermittel ausgebildet sind

Vorteilhafterweise verwendet man eine Vorrichtung, bei der die Mittel, durch welche wenigstens eine Menge von Laufzeitobjekten definiert wird, dadurch realisiert sind, dass eine den Laufzeitobjekten zuordenbare und/oder zugeordnete Information in einem definierten Speicherbereich gespeichert sind.

### Figuren

- Figur 1: beschreibt eine verallgemeinerte Darstellung einer Umschalt- und Vergleichseinheit
- Figur 2: beschreibt die wesentlichen Bestandteile des erfindungsgemäßen Verfahrens
- In Figur 3: ist eine erweiterte Form der Erfindung mit einem Scheduler beschrieben.
- In Figur 4: ist ein Multiprozessorsystem mit zwei Ausführungseinheiten dargestellt.

### Beschreibung der Ausführungsbeispiele

Eine Ausführungseinheit kann im Folgenden sowohl einen Prozessor/Core/CPU, als auch eine FPU (Floating Point Unit), DSP (Digitaler Signalprozessor), Coprozessor oder ALU (Arithmetic logical Unit) bezeichnen.

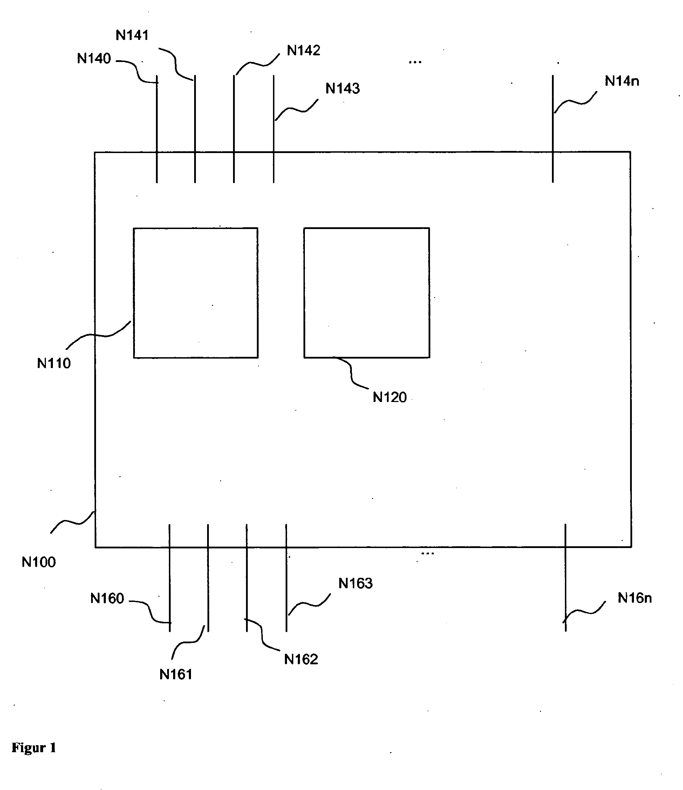

Die Erfindung bezieht sich auf ein in Figur 4 dargestelltes Multiprozessorsystem W100 mit wenigstens zwei Ausführungseinheiten W110a, W110b, einer Vergleichseinheit W120 und einer Umschalteinheit W150. In dieser Figur ist anhand eines Zweiprozessorsystems das Prinzip eines umschaltbaren Multiprozessorsystems beschrieben. In Figur 1 wird danach der allgemeine Fall einer Umschalt- und Vergleichseinheit für mehr als 2 Ausführungseinheiten beschrieben. Die vorgestellte Erfindung bezieht sich dabei immer auf den allgemeinen Fall mit 2 oder mehr Ausführungseinheiten. Die Ausführungseinheiten in Figur 4 sind jeweils über einen optionalen Zwischenspeicher W111a, W111b mit einer Vergleichseinheit W120 und einer Umschalteinheit W150 verbunden. Die Umschalteinheit W150 hat wenigstens zwei Ausgänge zu zwei Systemschnittstellen W130a, W130b. Über diese Schnittstellen können Register, Speicher oder Peripherals wie Digitale Ausgänge, D/A-Wandler, Kommunikationscontroller angesteuert werden. Dieses Multiprozessorsystem kann in wenigstens zwei Betriebsmodi betrieben werden, einem Vergleichsmodus VM und einem Performanzmodus PM. In einem Performanzmodus werden in den unterschiedlichen Ausführungseinheiten unterschiedliche Befehle, Programmsegmente oder Programme parallel ausgeführt. In diesem Betriebsmodus ist die Vergleichseinheit deaktiviert. Die Umschalteinheit W 150 ist in diesem Betriebsmodus so konfiguriert, dass jede Ausführungseinheit über den optionalen Zwischenspeicher mit einer der Systemschnittstellen W130a, W130b verbunden ist. Über die Systemschnittstellen kann ein Resultat einer Ausführungseinheit in einen Speicher W170 geschrieben werden oder auf einen Peripheriebaustein W180, W190 ausgegeben werden. Ein Peripheriebaustein kann z. B. ein Analog-Digital-Wandler oder ein Kommunikationscontroller eines Kommunikationssystems (z.B. SPI, LIN, CAN, FlexRay) sein. Zur Deaktivierung der Vergleichseinheit gibt es mehrere Möglichkeiten. Zum einen kann man an den Vergleicher ein Signal führen, mit dem dieser aktiviert oder deaktiviert wird. Dazu ist im Vergleicher eine zusätzliche Logik einzufügen, die dies durchführen kann. Eine weitere Möglichkeit ist es, dem Vergleicher keine zu vergleichenden Daten zuzuführen. Eine dritte Möglichkeit ist es, auf Systemebene das Fehlersignal des Vergleichers zu ignorieren. Weiter kann man auch das Fehlersignal selbst unterbrechen. Allen Möglichkeiten ist gemeinsam, dass sie im System einen Zustand erzeugen, bei dem es keine Rolle spielt, wenn zwei oder mehr Daten, die potenziell verglichen werden, verschieden sind. Wird dieser Zustand durch eine Maßnahme im Vergleicher oder dessen Ein- oder Ausgangssignalen erreicht, dann wird der Vergleicher als passiv oder deaktiviert bezeichnet. In einem Vergleichsmodus werden in beiden Ausführungseinheiten W110a, W110b gleiche oder gleichartige Befehle, Programmsegmente oder Programme abgearbeitet. Über die optionalen Zwischenspeicher W111a, W111b werden die Ausgangssignale der Ausführungseinheiten an die Vergleichseinheit W120 und an die Umschalteinheit W150 geführt. In der Vergleichseinheit werden die beiden Daten auf Übereinstimmung geprüft. Nach erfolgtem Vergleich wird der Umschalteinheit über ein Statussignal W125 mitgeteilt, ob diese eines der übereinstimmenden Ergebnisse an eine der Systemschnittstellen ausgeben darf oder ob sie aufgrund einer erkannten Diskrepanz der Ergebnisse das Signal sperren muss. In diesem Fall kann von der Vergleichseinheit ein optionales Fehlersignal W155 ausgegeben werden. Dieses Fehlersignal kann anstatt von der Vergleichseinheit auch von der Umschalteinheit ausgegeben werden (W156). Die Umschaltung kann dabei entweder über die Ausführung von speziellen Umschaltinstruktionen, speziellen Instruktionssequenzen, explizit gekennzeichneten Instruktionen oder durch den Zugriff auf eine bestimmte Speicheradresse durch wenigstens einen der Ausführungseinheiten des Multiprozessorsystems ausgelöst werden.

In Figur 1 wird jetzt eine verallgemeinerte Ausführung einer Umschalt- und Vergleichseinheit dargestellt, wie sie vorzugsweise verwendet werden soll. Von den n zu berücksichtigenden Ausführungseinheiten gehen n Signale N140,..., N14n an die Umschalt- und Vergleichskomponente N100. Diese kann bis zu n Ausgangssignale N160,..., N16n aus diesen Eingangssignalen erzeugen. Im einfachsten Fall, dem "reinen Performanzmodus", werden alle Signale N14i auf die entsprechenden Ausgangssignale N16i geleitet. Im ertgegen gesetzten Grenzfall, dem "reinen Vergleichsmodus" werden alle Signale N140,..., N14n nur auf genau eines der Ausgangssignale N16i geleitet.

An dieser Figur lässt sich darlegen, wie die verschiedenen denkbaren Modi entstehen können. Dazu ist in dieser Figur die logische Komponente einer Schaltlogik N110 enthalten. Diese Komponente muss nicht als eigene Komponente vorhanden sein. Entscheidend ist, dass die beschriebenen Funktionen im System realisiert sind. Die Schaltlogik N110 legt zunächst fest, wie viele Ausgangssignale es überhaupt gibt. Weiter legt sie fest, welche der Eingangssignale zu welchem der Ausgangssignale beitragen. Dabei kann ein Eingangssignal zu genau einem Ausgangssignal beitragen. In mathematischer Form anders formuliert ist also durch die Schaltlogik eine Funktion definiert, die jedem Element der Menge {N140,..., N14n} ein Element der Menge {N160,..., N16n} zuordnet.

Die Verarbeitungslogik N120 legt dann zu jedem der Ausgänge N16i fest, in welcher Form die Eingänge zu diesem Ausgangsignal beitragen. Auch diese Komponente muss nicht als eigene Komponente vorhanden sein. Entscheidend ist wieder, dass die beschriebenen Funktionen im System realisiert sind. Um beispielhaft die verschiedenen Variationsmöglichkeiten zu beschreiben, sei ohne Beschränkung der Allgemeinheit angenanmen, dass der Ausgang N160 durch die Signale N141, ..., N14m erzeugt wird. Falls m = 1 entspricht dies einfach einer Durchschaltung des Signals, falls m = 2 dann werden die Signale N141, N142 verglichen. Dieser Vergleich kann synchron oder asynchron durchgeführt werden, er kann bitweise oder nur auf signifikante Bits oder auch mit einem Toleranzband durchgeführt werden.

Falls m >= 3 gibt es mehrere Möglichkeiten. Eine erste Möglichkeit besteht darin, alle Signale zu vergleichen und bei Vorhandensein mindestens zweier verschiedener Werte einen Fehler zu detektieren, den man optional signalisieren kann. Eine zweite Möglichkeit besteht darin, dass man eine k aus m -Auswahl vornimmt (k >m/2). Diese kann durch Verwendung von Vergleichem realisiert werden. Optional kann ein Fehlersignal generiert werden, wenn eines der Signale als abweichend erkannt wird. Ein möglicherweise verschiedenes Fehlersignal kann generiert werden, wenn alle drei Signale verschieden sind. Eine dritte Möglichkeit besteht darin, diese Werte einem Algorithmus zuzuführen. Dies kann beispielsweise die Bildung eines Mittelwerts, eines Medianwert, oder die Verwendung eines fehlertoleranten Algorithmus (FTA) darstellen. Ein solcher FTA beruht darauf, Extremwerte der Eingangswerte weg zu streichen und eine Art der Mittelung über die restlichen Werte vorzunehmen. Diese Mittelung kann über die gesamte Menge der restlichen Werte, oder vorzugsweise über eine in HW leicht zu bildenden Teilmenge vorgenommen werden. In diesem Fall ist es nicht immer notwendig, die Werte tatsächlich zu vergleichen. Bei der Mittelwertbildung muss beispielsweise nur addiert und dividiert werden, FTM, FTA. oder Median erfordern eine teilweise Sortierung. Gegebenenfalls kann auch hier bei hinreichend großen Extremwerten optional ein Fehlersignal ausgegeben werden. Diese verschiedenen genannten Möglichkeiten der Verarbeitung mehrerer Signale zu einem Signal werden der Kürze wegen als Vergleichsoperationen bezeichnet.

Die Aufgabe der Verarbeitungslogik ist es also, die genaue Gestalt der Veigleichsoperation für jedes Ausgangssignal - und damit auch für die zugehörigen Eingangssignale - festzulegen. Die Kombination der Information der Schaltlogik N110 (d. h. die o. g. Funktion) und der Verarbeitungslogik (d. h. die Festlegung der Vergleichsoperation pro Ausgangssignal, d.h. pro Funktionswert) ist die Modusinformation und diese legt den Modus fest. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Zu betonen ist, dass im Fall von nur zwei Ausrührungseinheiten, wo es nur einen Vergleichsmodus gibt, die gesamte Information auf nur ein logisches Bit kondensiert werden kann.

Eine Umschaltung von einem Performanz- in einen Vergleichsmodus ist im allgemeinen Fall dadurch charakterisiert, dass Ausführungseinheiten, die im Performanzmodus auf verschiedene Ausgänge hin abgebildet werden, im Vergleichsmodus auf den gleichen Ausgang hin abgebildet werden. Vorzugsweise ist dies dadurch realisiert, dass es ein Teilsystem von Ausführungseinheiten gibt, bei dem im Performanzmodus alle Eingangssignale N14i, die im Teilsystem zu berücksichtigen sind, direkt auf korrespondierende Ausgangssignale N16i geschalten werden, während sie im Vergleichsmodus alle auf einen Ausgang hin abgebildet sind. Alternativ kann eine solche Umschaltung auch dadurch realisiert werden, dass Paarungen geändert werden. Es ist dadurch dargestellt, dass man im allgemeinen Fall nicht von dem Performanzmodus und dem Vergleichsmodus sprechen kann, obwohl man in einer gegebenen Ausprägung der Erfindung die Menge der erlaubten Modi so einschränken kann, dass dies der Fall ist. Man kann aber immer von einer Umschaltung vom Performanz- in den Vergleichsmodus (und umgekehrt) sprechen.

Zwischen diesen Modi kann, über Software gesteuert, dynamisch im Betrieb umgeschaltet werden. Ausgelöst wird die Umschaltung dabei beispielsweise über die Ausführung von speziellen Umschaltinstruktionen, speziellen Instruktionssequenzen, explizit gekemzeichneten Instruktionen oder durch den Zugriff auf bestimmte Adressen durch wenigstens eine der Ausführungseinheiten des Multiprozessorsystems.

Zunächst soll die Grundidee beschrieben werden. Ein Ansatz, um die Umschaltung zwischen verschiedenen Modi des Prozessors zu koordinieren, ist es, verschiedene Soffwaremodule in Laufzeitobjekten zu gruppieren, an die dann durch das Betriebssystem Rechenzeit vergeben wird. Jedes dieser Laufzeitobjekte enthält unter Anderem eine Kennung darüber, in welchem Modus dieses Laufzeitobjekt ausgeführt werden soll. Wenn diesem Laufzeitobjekt durch das Betriebssystem Rechenzeit zugewiesen wird, dann wird gleichzeitig der Moduswechsel durch das Betriebssystem veranlasst.

### Wesentliche Kernideen der Erfindung sind:

Einem Laufzeitobjekt ist eine spezielle Kennung zugeordnet, die vom Scheduler ausgewertet wird. Der Scheduler verwendet weiter die Information darüber, in welchem Modus sich das System aktuell befindet und optional weitere Konfigurationsinformationen, die Aussagen darüber machen, in welchem Modus sich das System künftig voraussichtlich befindet. Er benutzt diese Informationen, um eine Priorisierung über die möglichen Laufzeitobjekte vorzunehmen und entscheidet darüber, welchem Laufzeitobjekt Rechenzeit zugewiesen wird. Dadurch kann eine häufige Modusumschaltung vermieden werden.

In einer weiteren Ausführungsform ist dem Laufzeitobjekt eine spezielle Kennung zugeordnet, welche festlegt, dass das Laufzeitobjekt wechselseitig in verschiedenen Modi ausgeführt werden soll oder kann. Optional kann noch angegeben sein, nach wie vielen Aktivierungen in einem der Modi zu einem anderen und zu welchem Modus gewechselt werden soll. In einer speziellen Ausführungsform erhält ein Laufzeitobjekt eine spezielle Kennung, die festlegt, dass es nach mindestens n Ausführungen im einen Modus, mindestens einmal (m-Mal) in einem anderen ausgeführt wird. In einer weiteren Ausführungsform davon erhält ein Laufzeitobjekt eine spezielle Kennung, die festlegt, dass es nach mindestens n Ausführungen im einen Modus, mindestens einmal (m-Mal) in einem anderen ausgeführt wird. Vorteilhafterweise werden die Kennungen in Speichern abgelegt.

Optional kann der Scheduler auch eine Strategie verwenden, die diese Information dazu benutzt, eine geeignete Priorisierung vorzunehmen.

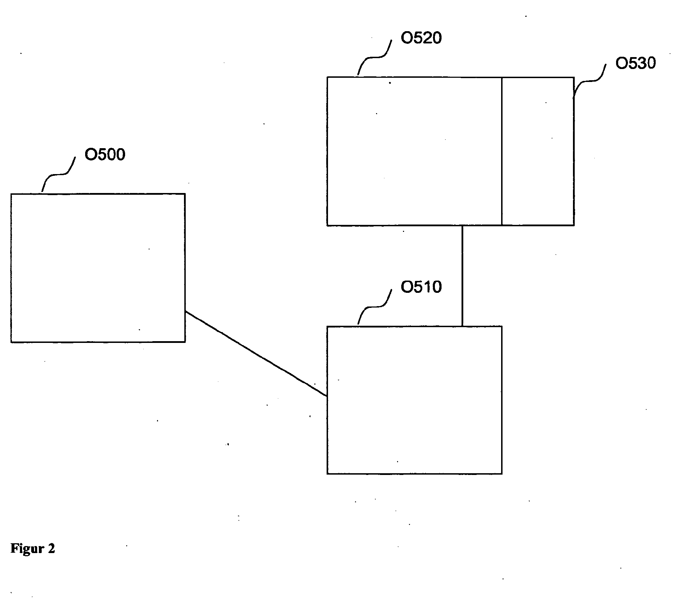

Figur 2 beschreibt die wesentlichen Bestandteile des erfindungsgemäßen Verfahrens. 0500 bezeichnet die Recheneinheit mit mehreren Ausführungseinheiten und einer Umschalt und Vergleichseinheit. 0520 bezeichnet die Menge der Laufzeitobjekte, die sich zu einem gegebenen Zeitpunkt um Rechenzeit bewerben. Oft wird zur Bezeichnung solcher Laufzeitobjekte die Zustandsbeschreibung "Ready" verwendet. 0520 bezeichnet also die Menge der Laufzeitobjekte, die sich zu einem gegebenen Zeitpunkt im Zustand Ready befinden. 0530 bezeichnet die diesen Laufzeiten zugeordneten Kennungen: Der Scheduler 0510 benutzt u. a. die Information über den aktuellen Modus der Recheneinheit und die Kennungen der Laufzeitobjekte im Zustand Ready, um eine Priorisierung dieser Laufzeitobjekte zu einem gegebenen Zeitpunkt vorzunehmen und dem dann Höchstprioren Laufzeitobjekt Rechenzeit zuzuweisen.

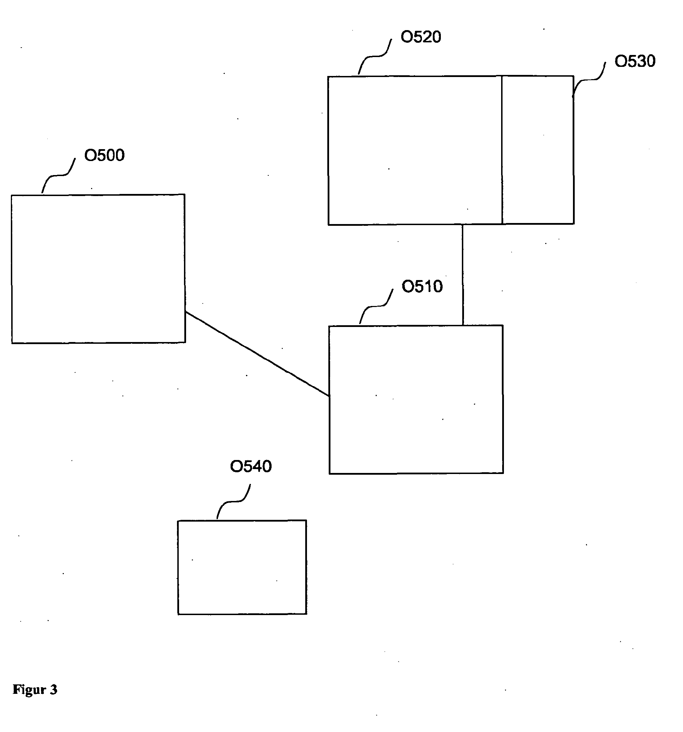

In Figur 3 ist eine weitere Ausführungsform beschrieben. Die Komponenten O500, 0510, 0520, O530 haben die gleiche Bedeutung wie in Figur 2. Zusätzlich ist die Konfigurationsinformation 0540 enthalten. Diese wird optional zusätzlich vom Scheduler verwendet, um die Priorisierung vorzunehmen.

Ein geeignetes Priorisierungsschema kann beispielsweise derart realisiert werde, dass Laufzeitobjekte, die im aktuellen Modus berechnet werden können, eine höhere Priorität oder eine Prioritätserhöhung erfahren. Dadurch ist es möglich, die Häufigkeit von Modusumschaltungen zu verringern und somit die Leistungsfähigkeit der Recheneinheit besser auszunutzen.

In einer weiteren Ausführungsform kann das Kennungsschema des Laufzeitobjekts so erweitert werden, dass zusätzlich eine Information darüber enthalten ist, die festlegt, dass das Laufzeitobjekt wechselseitig in verschiedenen Modi ausgeführt werden soll oder kann. Optional kann noch angegeben sein, nach wie vielen Aktivierungen in einem der Modi zu einem anderen und zu welchem Modus gewechselt werden sdl. In einer speziellen Ausführungsform erhält ein Laufzeitobjekt eine spezielle Kennung, die festlegt, dass es nach mindestens n Ausführungen im einen Modus, mindestens einmal (m-Mal) in einem anderen ausgeführt wird. In einer weiteren Ausführungsform erhält ein Laufzeitobjekt eine spezielle Kennung, die festlegt, dass es nach mindestens n Ausführungen im einen Modus, mindestens einmal (m-Mal) in einem anderen ausgeführt wird. Vorteilhafterweise werden die Kennungen in Speichern abgelegt.

Optional kann der Scheduler auch eine Strategie verwenden, die diese Information dazu benutzt, eine geeignete Priorisierung vorzunehmen. In diesem Fall kann z.B. ein Laufzeitobjekt im Zustand Ready, das im aktuellen Modus zwar ablauffähig ist, aber erst in fernerer Zukunft wieder im den aktuellen Modus aktiviert werden muss, eine niedrigere Priorität erhalten. Eine andere mögliche Strategie wäre es, ein Laufzeitobjekt, das nur besonders selten im aktuellen Modus ablaufen muss, dann mit einer besonders hohen Priorität zu versehen, wenn dieser Modus nur sehr selten eingenommen wird. Diese letzte Information kann beispielsweise den Konfigurationsinformationen entnommen werden.

Somit ist ein Verfahren und eine Vorrichtung zur Steuerung einer Recheneinheit (eines Prozessorsystems) mit mehreren Ausführungseinheiten und einer Umschalt- und Vergleichseinheit zur Umschaltung zwischen wenigstens zwei Betriebsmodi des Prozessorsystems, beschrieben, wobei eine Menge von Laufzeitobjekten definiert ist, ein Scheduler vorhanden ist, der diesen Laufzeitobjekten Ressourcen zuordnet und der Scheduler im Betrieb die aktuelle Modusinformation auswertet.

Den Laufzeitobjekten selbst ist mindestens eine Kennung zugeordnet, die Informationen über den Laufzeitobjekten zugeordneten Modus enthält und vom Scheduler ausgewertet wird

## Patentansprüche

1. Verfahren zur Steuerung eines Rechnersystems mit wenigstens zwei Ausführungseinheiten, wobei zwischen wenigstens zwei Betriebsmodi umgeschaltet wird und ein erster Betriebsmodus einem Vergleichsmodus und ein zweiter Betriebsmodus einem Performanzmodus entspricht, wobei wenigstens eine Menge von Laufzeitobjekten definiert ist und ein Scheduler vorgesehen ist, der den Laufzeitobjekten Rechenzeit des Rechnersystems zuordnet, wobei jedem Laufzeitobjekt der definierten Menge wenigstens eine Kennung zugeordnet ist und die Kennung dem Laufzeitobjekt einen der wenigstens beiden Betriebsmodi zuordnet, **dadurch gekennzeichnet, dass** Informationen über den aktuellen Betriebsmodus des Rechnersystems vorhanden sind, und dass der Scheduler abhängig von der Kennung und dem aktuellen Betriebsmodus des Rechnersystems eine Priorisierung der Laufzeitobjekte vornimmt und den höchstprioren Laufzeitobjekten Rechenzeit des Rechnersystems zuordnet.

2. Verfahren nach einem der vorhergehenden Ansprüche, **dadurch gekennzeichnet, dass** Informationen über einen zukünftigen Betriebsmodus des Rechnersystems vorhanden sind und der Scheduler diese bei der Ressourcenzuordnung berücksichtigt.

3. Verfahren nach einem der vorhergehenden Ansprüche, **dadurch gekennzeichnet, dass** wenigstens einem Laufzeitobjekt eine spezielle Kennung zugeordnet ist, welche festlegt, dass das Laufzeitobjekt wechselseitig in unterschiedlichen Betriebsmodi ausgeführt werden soll.

4. Verfahren nach einem der Ansprüche 1 oder 2, **dadurch gekennzeichnet, dass** wenigstens einem Laufzeitobjekt eine spezielle Kennung zugeordnet ist, welche festlegt das das Laufzeitobjekt nach mindestens n Ausführungen im einen Betriebsmodus, mindestens m-Mal in einem anderen Betriebsmodus ausgeführt wird.

5. Vorrichtung zur Steuerung eines Rechnersystems mit wenigstens zwei Ausführungseinheiten, mit Umschaltmitteln und Vergleichsmitteln, wobei zwischen wenigstens zwei Betriebsmodi umgeschaltet wird und ein erster Betriebsmodus einem Vergleichsmodus und ein zweiter Betriebsmodus einem Performanzmodus entspricht, wobei Mittel enthalten sind, durch welche wenigstens eine Menge von Laufzeitobjekten definiert wird und ein Scheduler vorgesehen ist, der den Laufzeitobjekten Rechenzeit des Rechnersystems zuordnet, wobei jedem Laufzeitobjekt der definierten Menge wenigstens eine Kennung zugeordnet ist und die Kennung dem Laufzeitobjekt wenigstens einen der beiden Betriebsmodi zuordnet, **dadurch gekennzeichnet, dass** Informationen über den aktuellen Betriebsmodus des Rechnersystems vorhanden sind, und dass der Scheduler abhängig von der Kennung und dem aktuellen Betriebsmodus des Rechnersystems den Laufzeitobjekten eine Priorität und den höchstprioren Laufzeitobjekten Rechenzeit des Rechnersystems zuordnet.

6. Vorrichtung nach Anspruch 5, **dadurch gekennzeichnet, dass** die Mittel, durch welche wenigstens eine Menge von Laufzeitobjekten definiert wird, als Speichermittel ausgebildet sind.

7. Vorrichtung nach Anspruch 5 oder 6, **dadurch gekennzeichnet, dass** die Mittel, durch welche wenigstens eine Menge von Laufzeitobjekten definiert wird, dadurch realisiert sind, dass eine den Laufzeitobjekten zuordenbare und/oder zugeordnete Information in einem definierten Speicherbereich gespeichert sind.

8. Vorrichtung nach einem der Ansprüche 5 bis 7, **dadurch gekennzeichnet, dass** die Vorrichtung derart ausgebildet ist, dass Informationen über einen zukünftigen Betriebsmodus des Rechnersystems vorhanden sind und der Scheduler diese bei der Ressourcenzuordnung berücksichtigt.

9. Vorrichtung nach einem der Ansprüche 5 - 8, **dadurch gekennzeichnet, dass** wenigstens einem Laufzeitobjekt eine spezielle Kennung zugeordnet ist, welche festlegt das das Laufzeitobjekt wechselseitig in unterschiedlichen Betriebsmodi ausgeführt werden soll.

10. Vorrichtung nach einem der Ansprüche 5 - 8, **dadurch gekennzeichnet, dass** wenigstens einem Laufzeitobjekt eine spezielle Kennung zugeordnet ist, welche festlegt, dass das Laufzeitobjekt nach mindestens n Ausführungen im einen Betriebsmodus, mindestens m-Mal in einem anderen Betriebsmodus ausgeführt wird.

## Claims

1. Method for controlling a computer system having at least two execution units, changeover being made between at least two operating modes and a first operating mode corresponding to a comparison mode and a second operating mode corresponding to a performance mode, at least one set of runtime objects being defined and a scheduler being provided which assigns computing time of the computer system to the runtime objects, at least one identifier being assigned to each runtime object in the defined set and the identifier assigning one of the at least two operating modes to the runtime object, **characterized in that** information relating to the current operating mode of the computer system is available, and **in that** the scheduler prioritizes the runtime objects on the basis of the identifier and the current operating mode of the computer system and assigns computing time of the computer system to the runtime objects with the highest priority.

2. Method according to Claim 1, **characterized in that** information relating to a future operating mode of the computer system is available, and the scheduler takes this information into account when assigning the resources.

3. Method according to one of the preceding claims, **characterized in that** a special identifier is assigned to at least one runtime object, which identifier defines that the runtime object is intended to be executed in different operating modes in an alternating manner.

4. Method according to either of Claims 1 and 2, **characterized in that** a special identifier is assigned to at least one runtime object, which identifier defines that the runtime object, after at least n executions in one operating mode, is executed at least m times in another operating mode.

5. Apparatus for controlling a computer system having at least two execution units, with changeover means and comparison means, a changeover being made between at least two operating modes and a first operating mode corresponding to a comparison mode and a second operating mode corresponding to a performance mode, means being included which define at least one set of runtime objects and a scheduler being provided which assigns computing time of the computer system to the runtime objects, at least one identifier being assigned to each runtime object in the defined set and the identifier assigning at least one of the two operating modes to the runtime object, **characterized in that** information relating to the current operating mode of the computer system is available, and **in that** the scheduler assigns a priority to the runtime objects on the basis of the identifier and the current operating mode of the computer system and assigns computing time of the computer system to the runtime objects with the highest priority.

6. Apparatus according to Claim 5, **characterized in that** the means which define at least one set of runtime objects are in the form of storage means.

7. Apparatus according to Claim 5 or 6, **characterized in that** the means which define at least one set of runtime objects are implemented by virtue of the fact that an item of information which can be assigned and/or is assigned to the runtime objects is stored in a defined storage area.

8. Apparatus according to one of Claims 5 to 7, **characterized in that** the apparatus is designed in such a manner that information relating to a future operating mode of the computer system is available, and the scheduler takes this information into account when assigning resources.

9. Apparatus according to one of Claims 5-8, **characterized in that** a special identifier is assigned to at least one runtime object, which identifier defines that the runtime object is intended to be executed in different operating modes in an alternating manner.

10. Apparatus according to one of Claims 5-8, **characterized in that** a special identifier is assigned to at least one runtime object, which identifier defines that the runtime object, after at least n executions in one operating mode, is executed at least m times in another operating mode.

## Revendications

1. Procédé pour commander un système d'ordinateur comprenant au moins deux unités d'exécution, une permutation étant effectuée entre au moins deux modes de fonctionnement et un premier mode de fonctionnement correspondant à un mode de comparaison et un deuxième mode de fonctionnement à un mode de performances, au moins une quantité d'objets à temps d'exécution étant définie et un ordonnanceur étant prévu, lequel affecte aux objets à temps d'exécution un temps de calcul du système d'ordinateur, au moins un identifiant étant associé à chaque objet à temps d'exécution de la quantité définie et l'identifiant affectant à l'objet à temps d'exécution l'un des au moins deux modes de fonctionnement, **caractérisé en ce qu'**il existe des informations sur le mode de fonctionnement actuel du système d'ordinateur et **en ce que** l'ordonnanceur procède à une définition des priorités des objets à temps d'exécution en fonction de l'identifiant et du mode de fonctionnement actuel du système d'ordinateur et affecte le temps de calcul du système d'ordinateur aux objets à temps d'exécution ayant la priorité la plus élevée.

2. Procédé selon la revendication 1, **caractérisé en ce qu'**il existe des informations sur un futur mode de fonctionnement du système d'ordinateur et l'ordonnanceur tient compte de celles-ci lors de l'affectation des ressources.

3. Procédé selon l'une des revendications précédentes, **caractérisé en ce qu'**un identifiant spécial est affecté à au moins un objet à temps d'exécution, lequel définit que l'objet à temps d'exécution doit être exécuté en alternance dans des modes de fonctionnement différents.

4. Procédé selon l'une des revendications 1 ou 2, **caractérisé en ce qu'**un identifiant spécial est affecté à au moins un objet à temps d'exécution, lequel définit que l'objet à temps d'exécution, après au moins n exécutions dans un mode de fonctionnement, est exécuté au moins m fois dans un autre mode de fonctionnement.

5. Dispositif pour commander un système d'ordinateur comprenant au moins deux unités d'exécution, comprenant des moyens de permutation et des moyens de comparaison, une permutation étant effectuée entre au moins deux modes de fonctionnement et un premier mode de fonctionnement correspondant à un mode de comparaison et un deuxième mode de fonctionnement à un mode de performances, des moyens étant inclus par le biais desquels au moins une quantité d'objets à temps d'exécution est définie et un ordonnanceur étant prévu, lequel affecte aux objets à temps d'exécution un temps de calcul du système d'ordinateur, au moins un identifiant étant associé à chaque objet à temps d'exécution de la quantité définie et l'identifiant affectant à l'objet à temps d'exécution au moins l'un des deux modes de fonctionnement, **caractérisé en ce qu'**il existe des informations sur le mode de fonctionnement actuel du système d'ordinateur et **en ce que** l'ordonnanceur procède à une définition des priorités des objets à temps d'exécution en fonction de l'identifiant et du mode de fonctionnement actuel du système d'ordinateur et affecte le temps de calcul du système d'ordinateur aux objets à temps d'exécution ayant la priorité la plus élevée.

6. Dispositif selon la revendication 5, **caractérisé en ce que** les moyens par le biais desquels est définie au moins une quantité d'objets à temps d'exécution sont réalisés sous la forme de moyens de mémorisation.

7. Dispositif selon la revendication 5 ou 6, **caractérisé en ce que** les moyens par le biais desquels est définie au moins une quantité d'objets à temps d'exécution sont réalisés **en ce qu'**une information qui peut être associée et/ou qui est associée à l'un des objets à temps d'exécution est enregistrée dans une zone de mémoire définie.

8. Dispositif selon l'une des revendications 5 à 7, **caractérisé en ce que** le dispositif est réalisé de telle sorte qu'il existe des informations sur un futur mode de fonctionnement du système d'ordinateur et l'ordonnanceur tient compte de celles-ci lors de l'affectation des ressources.

9. Dispositif selon l'une des revendications 5 à 8, **caractérisé en ce qu'**un identifiant spécial est affecté à au moins un objet à temps d'exécution, lequel définit que l'objet à temps d'exécution doit être exécuté en alternance dans des modes de fonctionnement différents.

10. Dispositif selon l'une des revendications 5 à 8, **caractérisé en ce qu'**un identifiant spécial est affecté à au moins un objet à temps d'exécution, lequel définit que l'objet à temps d'exécution, après au moins n exécutions dans un mode de fonctionnement, est exécuté au moins m fois dans un autre mode de fonctionnement.
